Europäisches Patentamt

European Patent Office

Office européen des brevets

(11) Numéro de publication: **0 047 466**

**B1**

(12)    FASCICULE DE BREVET EUROPEEN

(45) Date de publication du fascicule du brevet: **23.01.85**

(51) Int. Cl.⁴: **G 03 B 23/04**

(21) Numéro de dépôt: **81106804.8**

(22) Date de dépôt: **01.09.81**

(54) **Panier pour l'emmagasinage et le classement de fiches et machine pour la lecture de fiches, disposées dans de tels paniers.**

(30) Priorité: **09.09.80 FR 8019406**

(43) Date de publication de la demande:
**17.03.82 Bulletin 82/11**

(45) Mention de la délivrance du brevet:
**23.01.85 Bulletin 85/04**

(84) Etats contractants désignés:
**AT BE CH DE FR GB IT LI LU NL SE**

(56) Documents cités:
**DE-A-2 306 153**
**DE-A-2 343 671**
**US-A-3 083 960**
**US-A-3 187 890**
**US-A-3 563 646**

(73) Titulaire: **COMPAGNIE GENERALE D'AUTOMATISME C.G.A. ALCATEL Société anonyme dite:**
**12, rue de la Baume**
**F-75008 Paris (FR)**

(72) Inventeur: **Nael, Albert**
**16, Allée du Moulin Vert**
**F-91700 Sainte Genevieve Des Bois (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne un panier pour l'emmagasinage et la classement de fiches comprenant deux faces opposées et parallèles fixes l'une par rapport à l'autre, et munies chacune d'un même nombre de rainures se faisant face deux à deux, chaque paire de rainures pouvant recevoir une fiche. Un tel panier est connu, par exemple à partir du document DE—A 2 343 671.

Bien que le terme "fiche" englobe tous types de supports d'information plats opaques ou transparents, destinés à être lus directement ou par projection, l'invention concerne plus particulièrement les microfiches.

A part l'emmagasinage et le classement des fiches, le panier est destiné à coopérer directement avec un appareil de lecture des fiches.

Un but de l'invention est de réaliser un panier de grande capacité pouvant être associé à une machine permettant d'une part la projection sur un écran d'une portion agrandie de la fiche et d'autre part le classement automatique de fiches par passage d'un panier à un autre.

Ce but est atteint par un panier tel que spécifié ci-dessus qui est caractérisé en ce que les autres faces du panier sont non-fermées, en ce que ledit panier présente un plan de symétrie longitudinal perpendiculaire au plan des faces portant les rainures et à l'axe de ces rainures et en ce que sur l'une des faces munies de rainures sont articulés deux rabats pouvant indépendamment l'un de l'autre prendre une position ouverte permettent l'introduction ou l'extraction d'une fiche par chacune des faces non fermées correspondante du panier et une seconde position fermée rendant impossible ces fonctions.

Avantageusement, un panier selon l'invention qui est destiné à coopérer avec une machine pour la lecture des fiches comporte pour chaque rabat une tige qui s'étend de la face supérieure portant les rabats à la face inférieure posée sur la machine et dont une extrémité est en contact avec ledit rabat et dont l'autre extrémité coopère avec un organe de manoeuvre de la tige portée par ladite machine.

Selon une autre caractéristique, et dans le but de positionner avec précision le panier sur la machine, le panier comprend sur sa face inférieure d'une part une cavité coopérant avec un téton de positionnement porté par la machine et d'autre part une plaque métallique coopérant avec une portion aimantée de la machine.

L'invention a aussi pour objet une machine pour la lecture de fiches disposées dans des paniers tels que définis ci-dessus, caractérisée par le fait qu'elle comprend deux chariots pouvant chacun recevoir un panier, mobiles en translation selon deux chemins parallèles disposés de part et d'autre par rapport à des moyens optiques permettant une visualisation des fiches, la machine comportant des moyens pour extraire les fiches des paniers et les déplacer horizontalement et des moyens pour déplacer le système optique verticalement.

Selon un mode de réalisation de l'invention, les moyens de déplacement horizontal d'une fiche comprennent une double rangée de galets mobiles en rotation dont au moins l'une est motrice pouvant enserrer une fiche au voisinage de son arête supérieure et une glissière horizontale fixe dans laquelle la fiche engage son arête inférieure.

Avantageusement, des moyens sont prévus pour écarter l'une de l'autre les deux rangées de galets, ces moyens étant mis en oeuvre au moment de la visualisation.

L'invention sera bien comprise à la lumière de la description d'un exemple de réalisation de l'invention faite ci-après en regard du dessin annexé dans lequel:

La figure 1 donne une représentation en perspective d'un panier selon l'invention.

La figure 2 représente ce panier en coupe transversale en position sur la machine.

La figure 3 montre le même panier dans une position intermediaire sur le chariot (à moitié installé, à moitié sorti) et montre également le dispositif de positionnement.

La figure 4 donne une vue générale en perspective d'une machine selon l'invention.

La figure 5 montre cette machine vue du dessus.

La figure 6 montre selon une coupe VI—VI de la figure 5 le détail des moyens d'écartement de l'une des rangées de galets par rapport à l'autre.

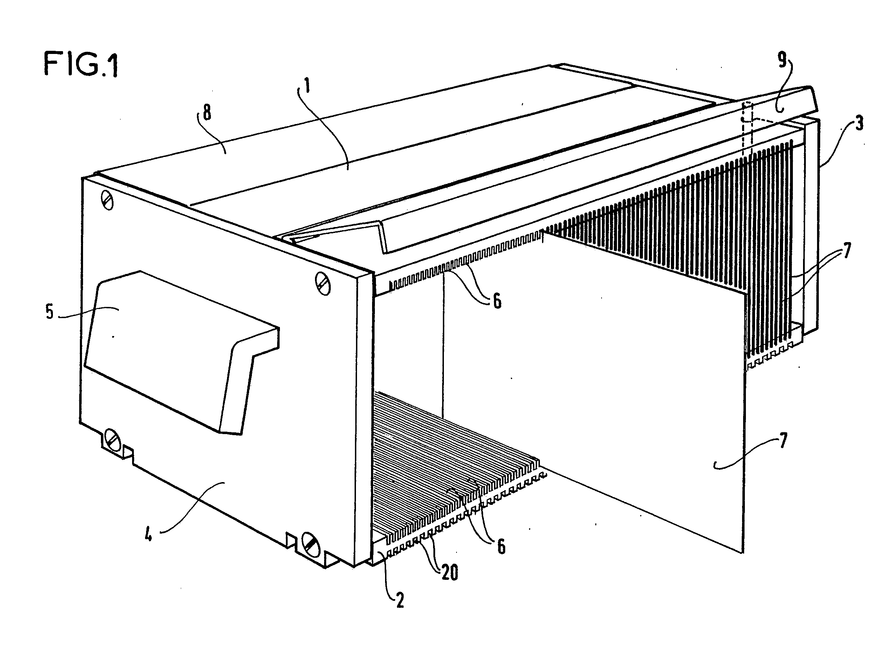

La figure 1 montre un panier selon l'invention qui comprend deux faces parallèles opposées, l'une supérieure 1 et l'autre inférieure 2. Ces deux faces sont maintenues fixes l'une par rapport à l'autre au moyen d'une face arrière 3 et d'une face avant 4 portant une poignée 5. Les faces supérieure et inférieure 1 et 2 sont munies de rainures 6 en nombre égal et se faisant face de manière à pouvoir introduire des fiches telles que 7.

Dans un tel panier, les fiches 7 peuvent d'une manière absolument équivalente être introduites ou extraites par l'une ou l'autre des deux faces non fermées, le panier étant symétrique par rapport à un plan longitudinal passant par le milieu des rainures 6. Pour éviter la chute des fiches 7 du panier, deux rabats 8 et 9 sont articulés sur la face supérieure 1. Sur la figure 1, le rabat 9 est levé et permet l'insertion ou l'extraction d'une fiche 7 du panier du côté de ce rabat. A l'inverse, le rabat 8 est fermé interdisant l'entrée ou la sortie d'une fiche du panier du côté de ce rabat.

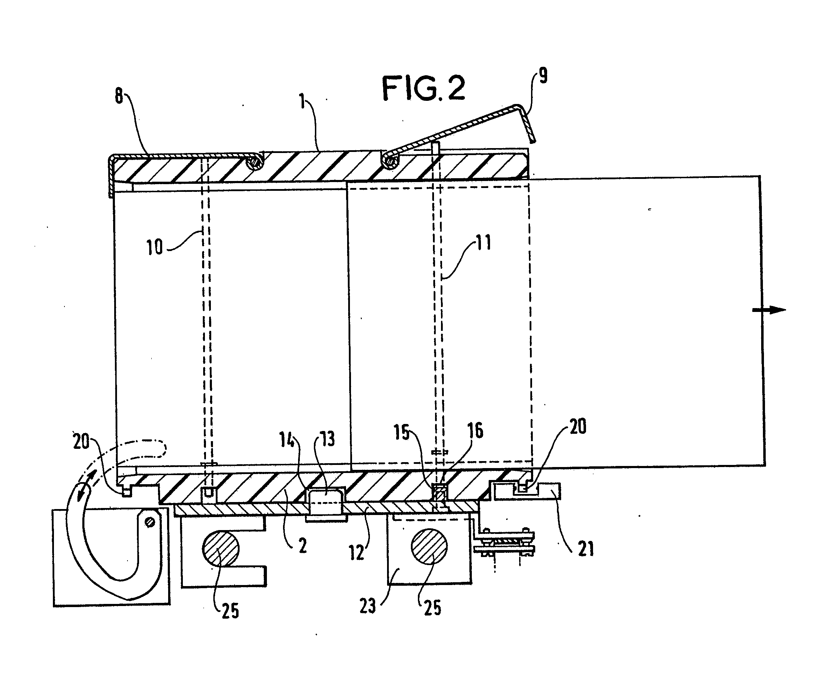

Sur la figure 2, le panier est vu en coupe transversale et placé sur un chariot d'une machine pour projeter l'image des fiches en vue de leur lecture. Le panier possède près de l'une des faces avant ou arrière du panier deux tiges 10 et 11 de manoeuvre, respectivement des rabats 8 et 9.

3  **0 047 466**  4

Ces tiges traversent les faces supérieure et inférieure, et prennent appui à leur extrémité supérieure contre les rabats. Lors de l'installation du panier sur un chariot 12 d'une machine permettant une projection de l'image des fiches, il est positionné par un téton 13 du chariot qui vient se loger dans un évidement 14 de la face inférieure 2 du panier, et en même temps une nervure 15 du chariot pénétre dans une rainure 16 du panier dans lequel débouche la tige 11 qui est soulevée et son action vient alors ouvrir le rabat 9.

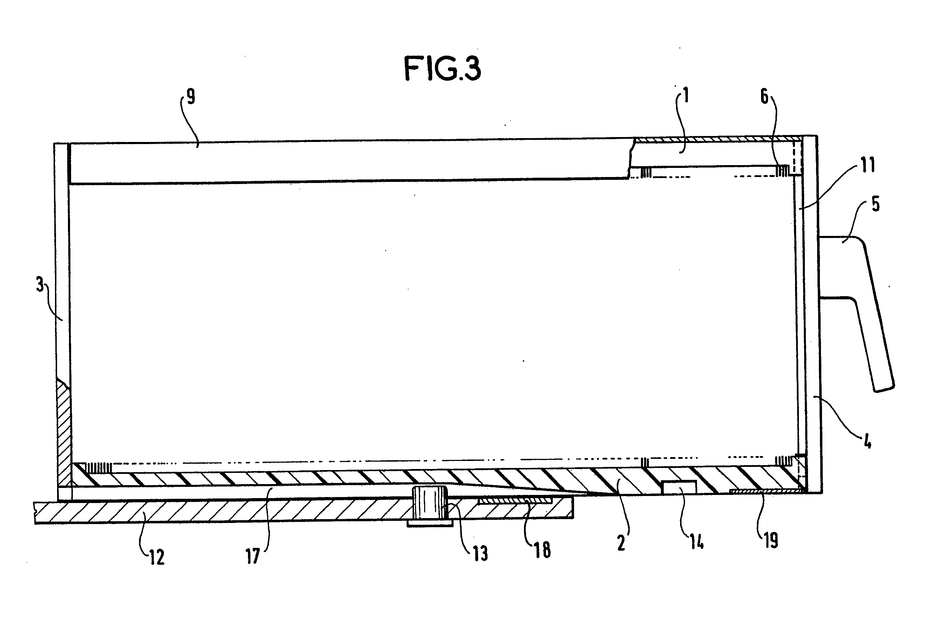

La figure 3 montre un panier à moitié installé sur le chariot d'une machine et l'on voit le téton 13, et l'évidement 14. Le guidage du panier est assurée par une rainure 17 dans laquelle vient coulisser le téton 13. L'extrémité de cette rainure du côté de l'évidement se termine en pan incliné. Cette figure montre en outre le dispositif permettant de bloquer le panier lorsqu'il est en position sur le chariot. Ce dispositif se compose d'un aimant 18 porté par le chariot et d'une pièce polaire 19 portée par le panier, ou vice versa. Ce blocage est nécessaire si l'on veut une grande précision, ce qui est indispensable dans le cas de microfiches où le pas d'une microfiche à l'autre est d'un millimètre, à cause du jeu inévitable entre le téton 13 et l'evidement 14. Comme on le voit sur les figures 1 et 2, le panier est pourvu de chaque côté d'un crantage 20 de manière à repérer exactement la position du panier. Ce crantage est associé à un dispositif électro-optique dont on voit l'un des éléments 21 sur la figure 2.

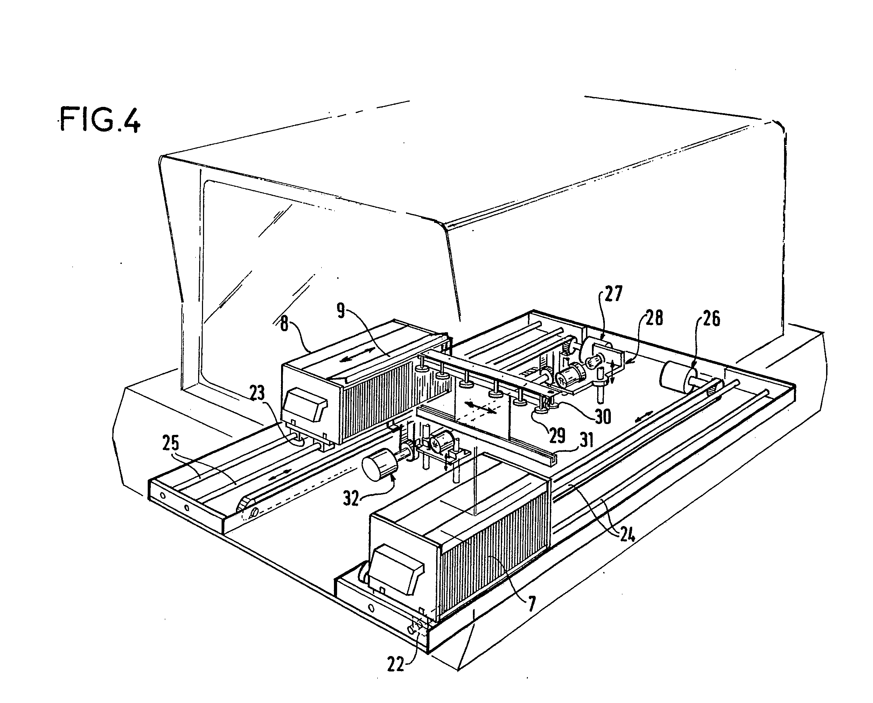

La figure 4 montre une vue générale en perspective d'une machine pour la lecture de fiches. Cette machine comporte deux chariots 22 et 23 pouvant recevoir chacun un panier. Ces chariots sont placés sur des tiges de guidage 24, 25 et comportent des moyens d'entraînement en translation 26, 27 le long de ces tiges. Ces deux dispositifs de support, guidage et entraînement des paniers sont placés symétriquement par rapport à un système optique 28. La machine comporte également des moyens non représentés d'extraction des fiches des paniers et des moyens pour déplacer les fiches horizontalement et les placer devant le système optique. Ces moyens de déplacement horizontal comprennent und double rangée de galets 29 et 30 mobiles en rotation dont au moins l'une est motrice, ces deux rangées pouvant enserrer une fiche au voisinage de son arête supérieure et une glissière horizontale fixe 31 dans laquelle la fiche engage son extrémité inférieure. Le système optique 28 comporte des moyens 32 de déplacement vertical.

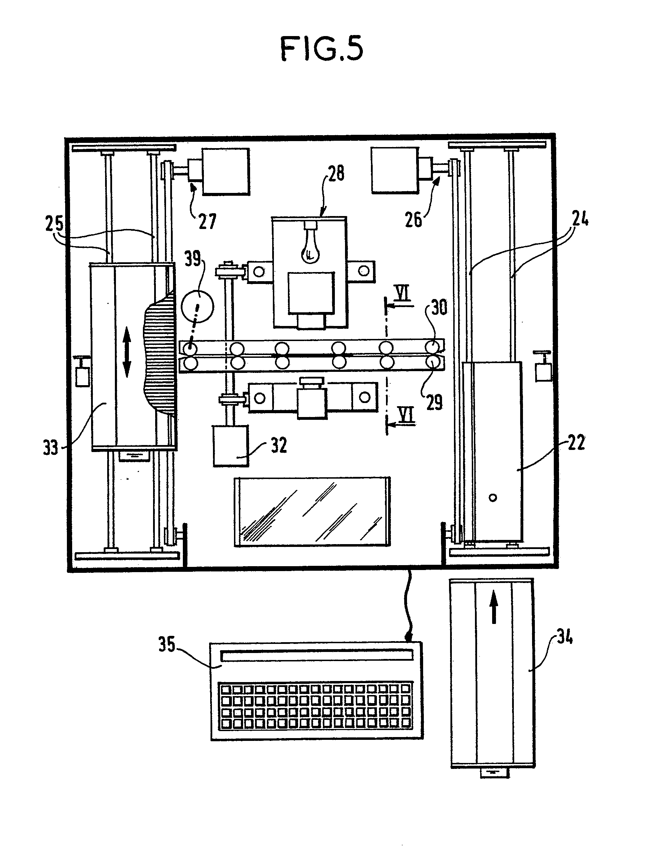

La figure 5 montre une vue de dessus de la machine avec un panier 33 en position de travail sur le chariot 23 de gauche qu'il cache sur la figure alors que le chariot 22 de droite n'est muni d'aucun panier. Un panier 34 est représenté en avant de la machine face au chariot de droite. Un pupitre de commande 35 est relié à la machine et permet de commander les opérations selon le programme désiré.

Le fait d'avoir une machine pouvant recevoir simultanément deux paniers: l'un sur le chariot de droite et l'autre sur le chariot de gauche est particulièrement intéressant car il permet de classer des fiches dans un panier vide selon un programme préétabli à partir d'un panier plein rempli de fiches non classées. Il était nécessaire pour cela de réaliser une machine symétrique et des paniers symétriques pouvant être placés indifféremment à droite ou à gauche de la machine et sans retournement du panier afin que les fiches soient toujours vues à l'endroit. La poignée 5 des paniers sert à cet effet de détrompeur évitant le retournement des paniers.

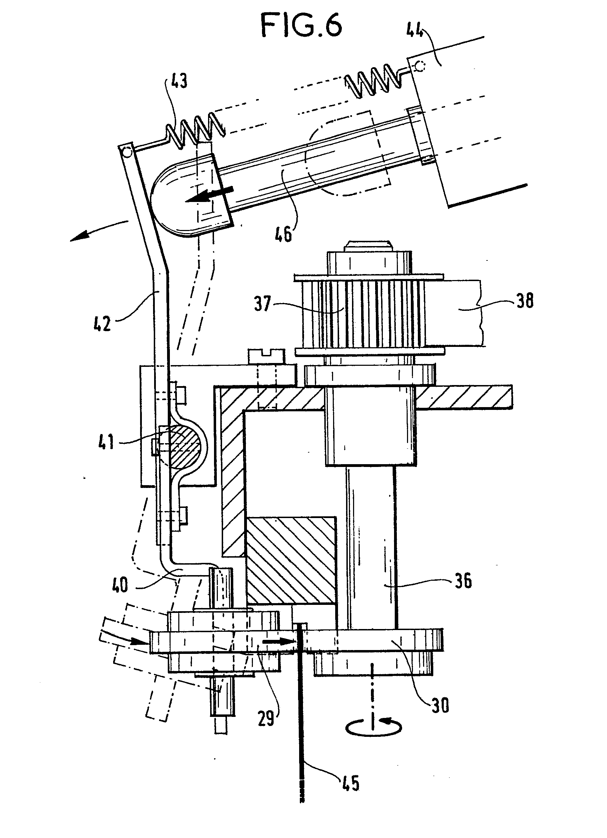

Au moment de la lecture d'une fiche, les deux rangées de galets qui enserrent les fiches s'écartent l'une de l'autre grâce au dispositif représenté sur la figure 6. La commande de l'écartement des deux rangées de galets est déclenchée par la détection d'une marque effectuée sur la fiche passant devant un détecteur non représenté situé sur la machine. Sur cette figure 6, on voit l'un des galets moteurs 30, les autres galets moteurs étant alignés perpendiculairement au plan de la figure. Ces galets 30 sont montés sur des arbres tels que 36, parallèles les uns par rapport aux autres et commandés en rotation par l'intermédiaire de pignons tels que le pignon 37, d'une courroie 38 et d'un moteur 39 visible sur la figure 5.

La rangée de galets mobiles tels que 29 est suspendue à des supports tels que 40 fixés sur un axe 41. Sur le même axe 41 est fixé un levier 42. Un ressort de rappel 43 fixé sur le levier et sur une partie fixe de la machine agit en opposition avec un électroaimant 44.

Lorsqu'une fiche telle que la fiche 45 est en place pour sa lecture, la tige 46 de l'électroaimant recule et le ressort 43 rappelle les galets 29 dans la position représentée en pointillée. La fiche repose alors librement par son arête inférieur dans le fond de la glissière fixe 31 et ne subit donc aucune contrainte susceptible de la plier ou de la déformer.

**Revendications**

1. Panier pour l'emmagasinage et le classement de fiches comprenant deux faces (1, 2) opposées et parallèles fixes l'une par rapport à l'autre, et munies chacune d'un même nombre de rainures (6) se faisant face deux à deux, chaque paire de rainures pouvant recevoir une fiche (7), caractérisé en ce que les deux autres faces du panier sont non-fermées, en ce que ledit panier présente un plan de symétrie longitudinal perpendiculaire au plan des faces portant les rainures et à l'axe de ces rainures et en ce que sur l'une des faces munies de rainures sont articulés deux rabats (8, 9) pouvant indépendamment l'un de l'autre prendre une première position ouverte permettant l'introduc-

3

tion ou l'extraction d'une fiche par chacune des faces non-fermées correspondante du panier et une seconde position fermée rendant impossible ces fonctions.

2. Panier selon la revendication 1 destiné à coopérer avec une machine pour la lecture des fiches, caractérisé en ce que chaque rabat (8, 9) peut être actionné par une tige (10, 11) qui s'étend de la face supérieure portant les rabats à la face inférieure posée sur la machine et dont une extrémité est en contact avec ledit rabat et dont l'autre extrémité coopère avec un organe de manoeuvre (15) de la tige portée par ladite machine.

3. Panier selon la revendication 2, caractérisé par le fait que, dans le but de positionner avec précision le panier sur la machine, il comprend sur la face inférieure d'une part une cavité (14) coopérant avec un téton (13) de positionnement porté par la machine et d'autre part une plaque métallique (19) coopérant avec une portion aimantée (18) de la machine ou vice-versa.

4. Machine pour la lecture de fiches disposées dans des paniers selon l'une des revendications 1 à 3, caractérisée par le fait qu'elle comprend deux chariots (22, 23) pouvant chacun recevoir un panier, mobiles en translation selon deux chemins parallèles disposés de part et d'autre par rapport à des moyens optiques (28) permettant une visualisation des fiches, la machine comportant des moyens pour extraire les fiches des paniers et les déplacer horizontalement et des moyens pour déplacer le système optique verticalement.

5. Machine selon la revendication 4, caractérisée en ce que les moyens de déplacement horizontal d'une fiche comprennent une double rangée de galets (29, 30) mobiles en rotation dont au moins l'une est motrice pouvant enserrer une fiche au voisinage de son arête supérieure et une glissière horizontale fixe (31) dans laquelle la fiche engage son arête inférieure.

6. Machine selon la revendication 5, caractérisée en ce que des moyens (40 à 44) sont prévus pour écarter l'une de l'autre les deux rangées de galets, ces moyens étant mis en oeuvre au moment de la visualisation.

**Patentansprüche**

1. Magazin zur Lagerung und er Einordnung von Karten, das zwei entgegengesetzte und parallele Seiten aufweist, die in bezug zueinander fest sind und je eine gleiche Anzahl von Rillen (6) aufweisen, die sich je zu zweit gegenüberliegen, wobei jedes Paar von Rillen eine Karte (7) aufnehmen kann, dadurch gekennzeichnet, daß die beiden anderen Seiten des Magazins nicht geschlossen sind, daß das Magazin eine Längs-Symmetrieebene aufweist, die senkrecht zur Ebene der die Rillen tragenden Seiten und der Achse dieser Riller liegt, und daß auf einer der mit Rillen versehenen Seiten zwei Klappen (8, 9) gelenkig angeordnet sind, die unabhängig voneinander eine offene Stellung einnehmen können, die die Einführung oder das Herausnehmen einer Karte durch jede der nichtgeschlossenen entsprechenden Seiten des Magazins ermöglicht, und eine zweite, geschlossene Stellung, die diese Funktionen unmöglich macht.

2. Magazin nach Anspruch 1, das mit einem Gerät zum Lesen der Karten zusammenwirken soll, dadurch gekennzeichnet, daß jede Klappe (8, 9) von einem Stab (10, 11) betätigt werden kann, der sich von der die Klappen tragenden Oberseite bis zur auf dem Gerät aufliegenden Unterseite erstreckt und dessen eines Ende mit der Klappe in Verbindung steht, während dessen anderes Ende mit einem Stab-Betätigungsorgan (15) zusammenwirkt, das von dem Gerät getragen wird.

3. Magazin nach Anspruch 2, dadurch gekennzeichnet, daß das Magazin, um präzise auf dem Gerät in Stellung zu gelangen, auf seiner Unterseite einerseits einen mit einem von dem Gerät getragenen Positionierstift (13) zusammenwirkenden Hohlraum (14) und andererseits eine Metallplatte (19) aufweist, die mit einem magnetisierten Bereich (18) des Geräts zusammenwirkt oder umgekehrt.

4. Gerät zum Lesen der in den Magazinen angeordneten Karten nach einem der Ansprüche 1 bis 3, dadurch gekennzeichnet, daß es zwei Wagen (22, 23) aufweist, die je ein Magazin aufnehmen können und die auf zwei parallelen, zu beiden Seiten an optischen Mitteln (28), die eine Sichtbarmachung der Karten ermöglichen, angeordneten Wagen beweglich sind, wobei das Gerät Mittel aufweist, um die Karten aus den Magazinen zu entnehmen und sie waagerecht zu verschieben, und Mittel, um das optische System senkrecht zu bewegen.

5. Gerät nach Anspruch 4, dadurch gekennzeichnet, daß die Mittel für die waagerechte Verschiebung einer Karte eine doppelte Reihe von drehbaren Laufrollen (29, 30) von denen mindestens eine von einem Motor angetrieben ist und eine Karte in der Nähe ihrer Oberkante einklemmen kann, und eine feste waagrechte Gleitschiene (31) aufweisen, in die die Unterkante der Karte eingeführt ist.

6. Gerät nach Anspruch 5, dadurch gekennzeich, daß Mittel (40 bis 44) vorgesehen sind, um die beiden Reihen von Laufrollen voneinander zu entfernen, wobei diese Mittel im Moment der Projektion eingesetzt werden.

**Claims**

1. A tray for storing and classifying slides comprising two opposed and parallel sides (1, 2) fixed one with respect to the other and each supplied with the same number of grooves (6) facing each other two by two, each pair of grooves being able to receive a slide (7), characterized in that the two other sides of the tray are open, that said tray presents a longitudinal symmetry plane which is perpendicular to the plane of the sides presenting the grooves and to the axis of these grooves, and that on one of the sides supplied with grooves, two side flaps (8, 9) are pivotably mounted, which can take independently from each other a first position permitting the introduction or extraction of a slide through each of the corresponding open side of the tray and a second, closed position which renders these functions impossible.

2. A tray according to claim ·1, provided to cooperate with an apparatus for reading the slides, characterized in that each side flap (8, 9) can be activated by a rod (10, 11) which extends from the upper side carrying the side flaps to the lower side lying on the apparatus, and one end of which is in contact with said side flap and the other end of which cooperates with an operating means (15) of the rod carried by said apparatus.

3. A tray according to claim 2, characterized in that in view of the accurate positioning of the tray on the apparatus, the tray comprises on the lower side on the one hand a cavity (14) cooperating with a positioning stud (13) carried by the apparatus and on the other hand a metal plate (19) cooperating with a magnetized portion (18) of the apparatus or the other way round.

4. An apparatus for the reading of slides disposed in trays according to one of the claims 1 to 3, characterized in that it comprises two carriages (22, 23) which can each receive a tray and which are movable in translation along two parallel paths disposed on either side with respect to optical means (28) permitting a visualization of the slides, the apparatus comprising means for withdrawing the slides from the trays and for moving them horizontally, and means for displacing the optical system vertically.

5. An apparatus according to claim 4, characterized in that the means for horizontally moving slides comprise a double range of rotatable rollers (29, 30), at least one of which is driven by a motor, and which are able to straddle a slide near its upper edge, and a fixed horizontal slide-way (31) in which the slide engages its lower edge.

6. An apparatus according to claim 5, characterized in that means (40 to 44) are provided for moving the two ranges of rollers away from each other, these means being activated at the moment of visualization.

FIG.1

FIG.2

# FIG.3

FIG.4

# FIG.5

# FIG.6